# FASCICULE DE BREVET EUROPEEN

(11) **EP 1 772 353 B1**
(45) Date de publication et mention de la délivrance du brevet: **15.12.2010**
(21) Numéro de dépôt: 06301022.7
(22) Date de dépôt: 05.10.2006
(51) Int. Cl.: B62D 25/08, B60Q 1/04

(54) **Support pour bloc optique de véhicule automobile**
Träger für optische Einheit eines Kraftfahrzeugs
Support for optical assembly of motor vehicle

(30) Priorité: 06.10.2005 FR 0510245
(43) Date de publication de la demande: 11.04.2007
(73) Titulaire: COMPAGNIE PLASTIC OMNIUM, 69007 Lyon (FR)
(72) Inventeur: Fayt, Arnold, 01640, JUJURIEUX (FR); Cheron, Hugues, 01800, MEXIMIEUX (FR)
(74) Mandataire: Remy, Vincent Noel Paul

(56) Documents cités:
- EP-A- 1 384 623
- EP-A1- 1 568 580
- WO-A-2006/120359
- DE-A1- 10 030 374
- FR-A- 2 857 645

## Description

La présente invention concerne un support pour bloc optique de véhicule automobile.

On sait que le positionnement précis des pièces de carrosserie, notamment autour des blocs optiques, est de plus en plus soigné. On a déjà proposé à cet effet d'utiliser un support sur lequel les blocs optiques et la peau de pare-chocs sont convenablement positionnés les uns par rapport aux autres, notamment à l'aide de presseurs, avant d'être rapportés sur le véhicule. Le support, les blocs optiques et la peau sont ensuite rapportés sous forme de module sur le véhicule, comme cela est décrit dans la publication EP 1 352 811. Ce support permet également de rigidifier la peau de pare-chocs, c'est pourquoi il est avantageux de le fixer solidement à la peau, par exemple par soudage.

Le document FR 2857645 décrit également un support permettant de positionner un bloc optique par rapport à une peau-de pare-chocs.

Cependant, un tel support ne permet pas de monter/démonter facilement les blocs optiques, la peau de pare-chocs ou une aile, pour leur réparation, sans avoir à démonter l'ensemble des pièces portées par le support.

Si, par ailleurs, les pièces sont montées sans support mais séparément sur le véhicule selon une méthode plus conventionnelle, le démontage des blocs optiques, puis leur remontage oblige à repositionner les pièces de carrosserie environnantes.

Le document EP 1568580 décrit un bloc optique dont le boîtier est mis en référence par rapport à une aile grâce à un doigt d'indexage prévu sur le boîtier inséré dans une nervure ménagée sur l'aile. Enfin, le document WO 2006/120369 décrit un renfort en plusieurs parties permettant de conformer une peau de pare-chocs autour de blocs optique. Ce document n'est opposable qu'au titre de l'article 54(3) CBE

La présente invention vise à fournir un support autorisant le démontage d'un bloc optique sans nécessiter le démontage des pièces de carrosserie environnantes et sans modifier le positionnement d'une pièce de carrosserie entourant le bloc optique.

A cet effet, la présente invention a pour objet un support pour bloc optique, selon la revendication 1.

Ainsi, le support utilisé est capable d'assurer une mise en référence du bloc optique et de l'aile de façon satisfaisante. Il autorise en outre le démontage du bloc optique, par exemple par translation vers l'extérieur du véhicule, grâce à l'agencement du logement, des moyens de fixation et des moyens de mise en référence.

On entend par "moyens de mise en référence" des moyens qui agissent directement sur les deux bords en regard des pièces à mettre en référence pour positionner ces deux bords l'un par rapport à l'autre, c'est pourquoi de tels moyens sont quelquefois appelés "moyens de mise en référence directe".

De tels moyens se distinguent de moyen de fixation réglables des pièces, lesquels nécessitent que l'on positionne les deux pièces manuellement avant de serrer les fixations. En outre, les moyens de mise en référence directe sont localisés à proximité des bords en regard, alors que les moyens de fixation en sont en général éloignés.

On entendra par "bloc optique" l'ensemble d'un vitrage d'optique et d'un boîtier optique.

Le support comprend des moyens de guidage qui guident le bloc optique entre les positions sortie et rentrée.

Selon un mode de réalisation de l'invention, ces moyens de guidage comportent un pion, une nervure, une glissière ou un rail, conformés de façon à coopérer avec un moyen de guidage complémentaire ménagé sur le bloc optique.

De préférence, la direction de démontage du bloc optique correspond sensiblement à la direction de déplacement, ou direction longitudinale, du véhicule.

Eventuellement, les moyens de guidage autorisent non seulement les déplacements du bloc optique entre sa position rentrée et sa position sortie en vue de son démontage, mais également son déplacement lors du premier montage du bloc optique sur la chaîne de montage. Par exemple, il peut être particulièrement intéressant de pouvoir monter le bloc optique, sur la chaîne de montage, depuis le compartiment moteur du véhicule vers sa position rentrée, de façon à se conformer à une chaîne de montage existante, tout en permettant de le démonter plus tard, lors de réparations, depuis l'avant du véhicule. De tels moyens de guidage sont donc adaptés pour faire translater le bloc optique depuis le compartiment moteur vers l'extérieur du véhicule, en passant par le logement délimité par le support.

De préférence, le support comporte également des moyens démontables de fixation de la pièce de carrosserie, ces moyens assurant la fixation de manière directe ou par l'intermédiaire d'un support de l'aile. Les moyens démontables de fixation du bloc optique et de l'aile peuvent être confondus, de façon à simplifier la structure du support. Il peut être particulièrement avantageux que ces moyens de fixation soient communs et configurés de façon à prendre trois positions distinctes de fixation, à savoir une position de fixation du bloc optique et de l'aile, une position de fixation du bloc optique uniquement, et une position de non fixation, dans laquelle ni le bloc optique ni l'aile ne sont fixés au support. De tels moyens de fixation peuvent comporter une tige insérée dans le support, la position de la tige déterminant la position de fixation des moyens de fixation.

De préférence, les moyens démontables de fixation ne sont accessibles que lorsque le capot du véhicule est ouvert, de façon à empêcher les vols du bloc optique ou de l'aile.

Selon un mode de réalisation préféré de l'invention, le support délimite le logement en comprenant trois montants disposés en U, à l'intérieur duquel se trouve le logement. Eventuellement, le support comprend une platine horizontale s'étendant sous le bloc optique, de façon à le porter, cette platine pouvant remonter de façon à entourer au moins partiellement le bloc optique.

De préférence, les moyens de mise en référence du bloc optique et les moyens de mise en référence directe de l'aile sont des presseurs, disposés de façon avantageuse sur le contour du logement recevant le bloc optique.

Eventuellement, le support comporte également des moyens de fixation ou de positionnement sur une pièce de structure du véhicule, à savoir une face avant technique, un support d'aile, un longeron, ou encore tout autre élément de la caisse de véhicule.

De façon optionnelle, le support de bloc optique selon l'invention comporte également des moyens de fixation d'un dispositif de lavage d'un vitrage d'optique, d'un capteur-émetteur de rayons infrarouges, d'un autre radar.

L'invention sera mieux comprise à la lecture de la description qui va suivre, donnée uniquement à titre d'exemple et faite en se référant aux dessins dans lesquels :
- la figure 1 est un schéma en perspective éclatée d'une partie d'un bloc avant comportant un support pour bloc optique selon l'invention ;
- la figure 2 est une vue en perspective du support de la figure 1 ;
- la figure 3 est une vue en coupe selon II-II d'une partie du support de la figure 2 avec le bloc optique et une peau ;
- la figure 4 est une vue en perspective d'un bloc avant comportant le support de la figure 1 ;
- la figure 5 est un schéma en perspective des pièces de la figure 1, montées au de façon modulaire ; et
- la figure 6 est un schéma en perspective des pièces de la figure 1, montées de façon pièce à pièce.

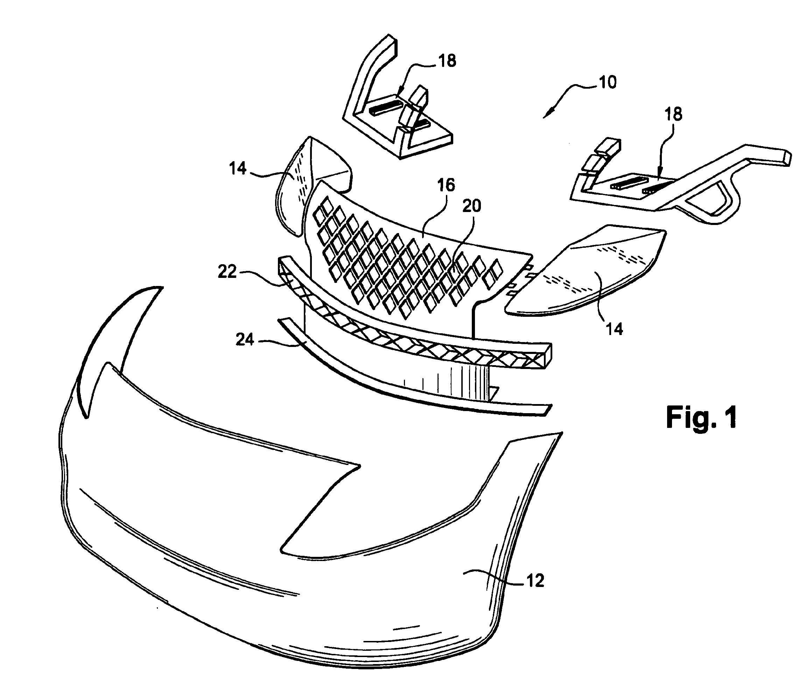

Comme on peut le voir sur la figure 1, un bloc avant de véhicule automobile comprend une peau de pare-chocs 12 et deux blocs optiques 14. Ces pièces sont positionnées sur le véhicule à l'aide d'un support 16 de la peau de pare-chocs, dit support central et deux supports d'optique 18 selon l'invention, ces deux supports 18 étant symétriques par rapport au plan longitudinal du véhicule.

Le support central 16 est souple, c'est-à-dire qu'il est réalisé dans un matériau et selon une forme tels que l'on peut le qualifier de souple comparé à des pièces de structure du véhicule, telles qu'une face avant technique, une traverse supérieure ou un longeron. La support d'optique 18 est de préférence plus rigide que le support central.

Le support 16 est soudé ou collé à la peau 12, ou bien fixé par d'autres moyens de fixation classiques. Il épouse sensiblement sa forme intérieure, plus précisément la partie de la peau 12 disposée entre les deux blocs optiques 14. Le support central 16 comporte des ajours 20, de façon à limiter son poids tout en renforçant la peau, notamment pour empêcher son cloquage. Sa souplesse permet de le déformer relativement facilement, pour permettre le positionnement relatif des différentes pièces de carrosserie de l'avant du véhicule.

Ce support central 16 est par ailleurs fixé à un absorbeur de chocs 22, lui-même fixé à une voie basse 24 destinée à traiter les chocs piétons. Selon un autre mode de réalisation, le support central 16, l'absorbeur 22 et la voie basse 24 pourraient être réalisés d'un seul tenant.

Selon un mode de réalisation non représenté, le support central pourrait être composé d'une pièce support d'une grille d'entrée d'air, telle qu'une grille de calandre disposée entre les deux blocs optiques 14. Cette grille de calandre pourrait en outre être fixée à une peau de pare-chocs, de forme différente de la peau 12, par exemple située en dessous de la grille de calandre. La peau de pare-chocs et la grille de calandre peuvent être alors supportées soit par un support central commun, soit par deux supports centraux distincts réunis entre eux. Dans ce mode de réalisation, le support d'optique 18 comporte des moyens de mise en référence du bloc optique avec la grille de calandre et éventuellement avec la peau de pare-chocs.

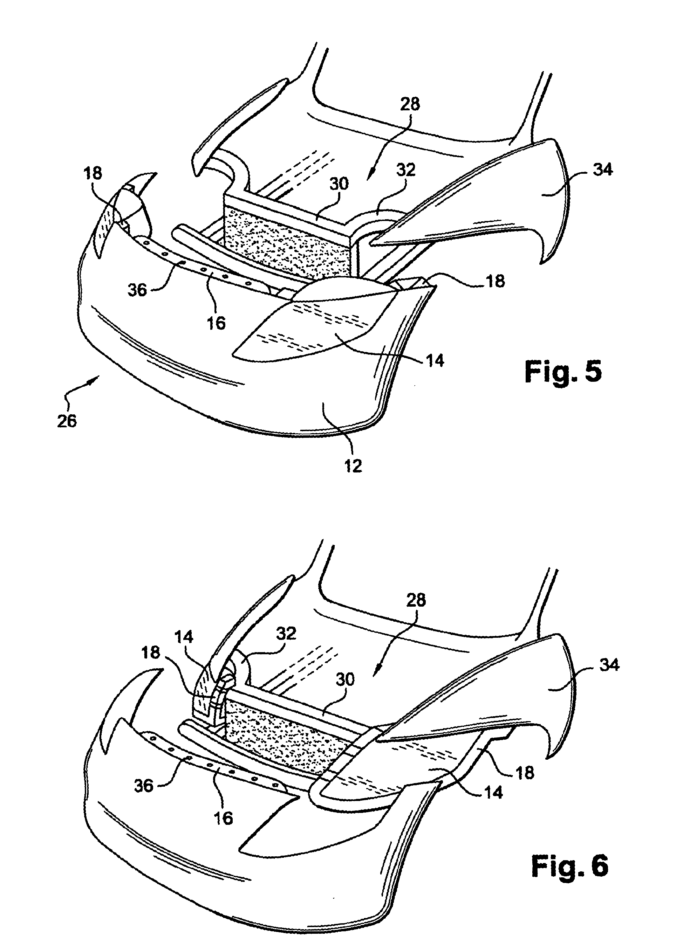

Le procédé de montage de l'avant d'un véhicule comportant les pièces ci-dessus peut se faire selon deux méthodes : un montage modulaire, illustré sur la figure 5, ou bien un montage pièce à pièce, illustré sur la figure 6.

Le procédé de montage modulaire consiste à assembler, en dehors de la chaîne principale de montage du véhicule, l'ensemble des pièces de la figure 1. On dispose ainsi d'un module 26, comportant à la fois la peau de pare-chocs 12 et les blocs optiques 14, ces trois pièces de carrosserie étant convenablement positionnées grâce au support central 16 et aux deux supports d'optique 18. Le module 26 comporte en outre l'absorbeur 22 et la voie basse 24.

Une fois assemblé, le module est rapporté sur le reste du véhicule, se trouvant sur la chaîne de montage. A ce stade du montage, le véhicule comprend une caisse en blanc 28, composée de différentes pièces de structure (toutes ne sont pas représentées), parmi lesquelles se trouvent une poutre de chocs, des longerons et une traverse supérieure 30, aux extrémités de laquelle se trouvent deux éléments rigides 32 formant des supports d'ailes. Le support 16 est plus souple que ces différentes pièces de structure. A ce stade du montage, deux ailes 34 avant sont également montées sur le véhicule.

Pour monter le module 26 sur le reste du véhicule, on fixe le support central 16 à la traverse supérieure 30, grâce à des trous de fixation 36 ménagés sur le support central 16. Par ailleurs, on fixe le support d'optique 18 sur le support d'aile 32 à l'aide d'un autre moyen de fixation décrit plus loin. On positionne l'aile 34 sur le support d'optique 18 qui comporte, comme décrit ci-dessous, des moyens de positionnement ou de fixation de l'aile. Comme la peau et les blocs optiques sont convenablement positionnés sur ce module, l'étape de montage consiste simplement à fixer le module sur le reste du véhicule, sans nécessiter de manipulations pour repositionner les différents éléments de carrosserie situés autour du bloc optique14, à savoir les ailes et la peau de pare-chocs.

Le support 10 permet également de monter la peau 12 et les blocs optiques 14 selon un montage pièce à pièce, illustré sur la figure 6. Selon ce montage, les blocs optiques 14 sont préalablement fixés sur les supports d'optique 18, et sont ensuite montés sur la structure du véhicule 28. Ce montage est effectué en fixant les supports latéraux 18 sur les supports d'ailes 32 et en les positionnant par rapport à la face avant technique. Les blocs optiques 14 sont positionnés par rapport aux ailes 34 grâce aux supports d'optique 18.

Une fois les blocs optiques 14 montés, on peut rapporter la peau de pare-chocs 12. Celle-ci a préalablement été fixée au support central 16, par soudage ou collage. La peau 12 est fixée sur le véhicule grâce aux trous 36 du support central 16. Elle est en outre convenablement positionnée par rapport aux blocs optiques 14, et par rapport à l'aile 34 grâce aux différents moyens de positionnement ménagés sur le support latéral 18, décrits un peu plus loin.

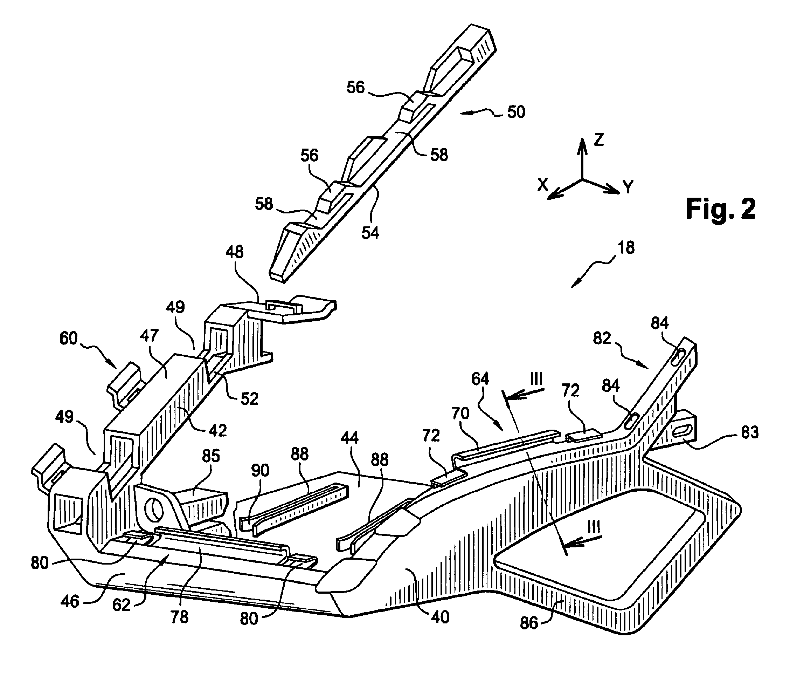

Le support d'optique 18, visible de façon plus détaillée sur la figure 2, comporte un logement pour recevoir le bloc optique 14, il est configuré de façon à l'encadrer. Il est plus rigide que le support 16. Il est composé d'un montant vertical extérieur 40, d'un montant vertical intérieur 42 et d'une platine horizontale 44, augmentant sa rigidité, et comportant un bord avant 46. Les montants 40, 42 et la platine 44 sont disposés en U autour du bloc optique, définissant ainsi le logement. La platine 44 permet de soutenir le bloc optique 14 sur une grande surface, mais pourrait être aisément remplacée par un montant horizontal soutenant seulement l'avant du bloc optique 14, dans la zone du bord 46.

Le montant intérieur 42 porte des moyens démontables de fixation du support central 16 ainsi que du bloc optique 14. Ces moyens de fixation sont confondus. Ils s'étendent sur toute la longueur du montant 42, sous forme d'un tube creux 47 comportant une ouverture 48 par laquelle est insérée une tige de verrouillage 50. Le bloc optique 14 (non représenté) comporte deux languettes latérales, capables d'être insérées dans deux lumières traversantes 49 ménagées dans le tube creux 47. Par ailleurs, le support central 16 du support comporte également deux languettes latérales (non représentées) adaptées pour être insérées dans ces deux lumières 49.

Le fonctionnement de ces moyens de fixation va à présent être décrit.

On fixe le bloc optique 14 en le plaçant dans le logement défini par les montants 40, 42 et la platine 44, et en insérant les deux languettes latérales dans les lumières 49. Puis, on insère la tige 50 dans le tube 47 en la faisant pénétrer par l'ouverture 48. Une fois que la tige 50 est enfoncée dans le tube 47, sans qu'elle ne soit intégralement enfoncée, les languettes latérales du bloc optique 14 sont prises en sandwich, dans les lumières 49, entre la partie inférieure 52 du montant 42 et la paroi inférieure 54 de la tige 50.

Ensuite, pour fixer la peau du pare-chocs 12, via le support central 16, sur le support d'optique 18, la tige 50 ne doit pas être totalement enfoncée dans le tube 47, de façon que deux languettes 56, ménagées sur la surface supérieure de la tige 50, ne se retrouvent pas au droit des lumières 49. On peut alors insérer les deux languettes latérales du support central 16 dans les lumières 49, de façon qu'elles reposent sur la surface supérieure 58 de la tige 50. Une fois ces languettes insérées, on peut enfoncer la tige 50 jusqu'au bout du tube 47. Au cours de cette insertion, les languettes supérieures 56 se retrouvent au droit des lumières 49, en recouvrant les languettes latérales du support 16, de façon à les prendre en sandwich entre la paroi 58 de la tige 50 et les languettes 56.

Comme on peut le constater, la tige 50 peut prendre 3 positions distinctes :
- une position de fixation du bloc optique et du support central 16, lorsque la tige 50 est intégralement insérée dans le tube 47,
- une position de fixation du bloc optique uniquement, le support central 16 étant libéré, position dans laquelle la tige est partiellement insérée dans le tube 47, les languettes 56 ne se trouvant pas au droit des lumières 49, et
- une position de libération du support central 16 et du bloc optique 14, position obtenue lorsque la tige 50 est retirée du logement 47.

On peut remarquer que la tige est insérée dans le support d'optique 18 par l'ouverture 48 qui se trouve du côté du montant 42 le plus proche du compartiment moteur du véhicule, si bien que la tige 50, une fois insérée, n'est accessible que depuis ce compartiment moteur, lorsque le capot est ouvert.

Le support d'optique 18 comporte par ailleurs des moyens de mise en référence directe du bloc optique et de la peau, disposés autour du bloc optique, comprenant un presseur 60 ménagé sur le montant 42, un presseur 62 ménagé sur le bord 46, et un presseur 64 ménagé sur le montant 40.

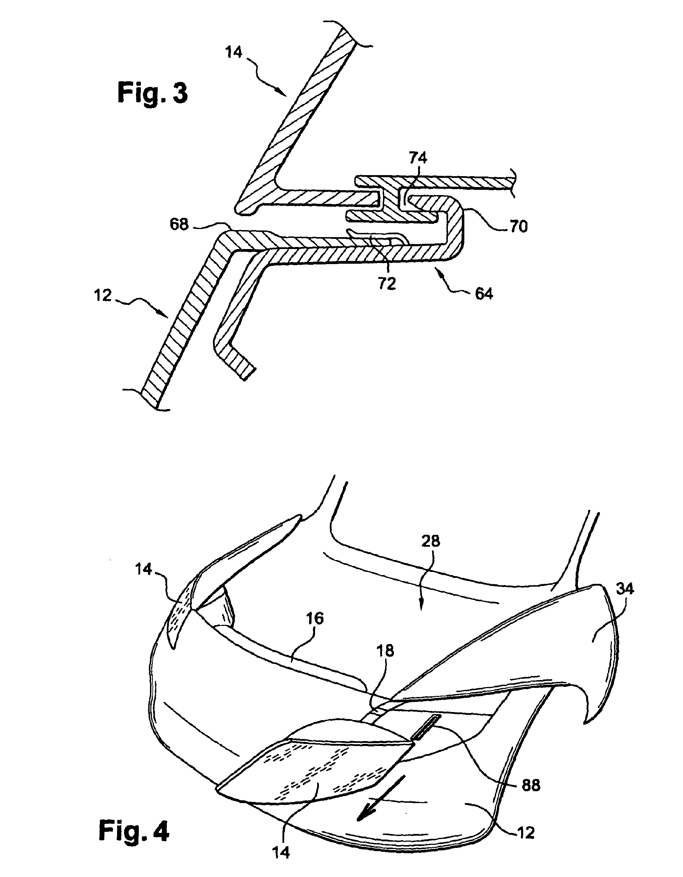

Le fonctionnement du presseur 64, illustré sur la figure 3, va à présent être décrit.

Le presseur 64 sert à positionner le vitrage du bloc optique 14 et le bord 68 de la crosse de pare-chocs. Il comprend à cet effet une grande languette supérieure 70 et deux petites languettes inférieures 72.

Pour positionner le bord du vitrage d'optique 14, on insère la languette 70 dans une encoche 74 ménagée dans le boîtier d'optique. Pour positionner le bord 68 de la peau de pare-chocs, on insère l'extrémité du rebord de la peau dans la languette 72. On voit aisément que la combinaison des languettes 72 et 70 permet de garantir un jeu restreint et constant, et une mise en affleurement du vitrage et de la peau de pare-chocs 12.

Le presseur 60 sert à positionner le bord 76 de la peau de pare-chocs sur le support d'optique 18, ainsi que le vitrage du bloc optique 14.

Le presseur 62 comporte une grande languette supérieure 78, ainsi que deux petites languettes inférieures 80. Il permet de positionner la peau de pare-chocs et le bloc optique de la même façon que le presseur 64.

Le support d'optique 18 comporte par ailleurs, sur le montant 40, une partie 82 comprenant des moyens 84 de fixation de l'aile. Selon un autre mode de réalisation non illustré, la partie 82 comporte un presseur permettant de positionner l'aile sur le support 18.

Le montant extérieur 40 comporte en outre un renfort 86, destiné à épouser la forme intérieure de la crosse de la peau de pare-chocs 12, de façon à jouer un rôle d'anti-cloquage.

Selon un autre mode de réalisation non représenté, le montant 40 comporte également des moyens de fixation de l'extrémité extérieure de la peau de pare-chocs.

Le support d'optique 18 comporte des moyens de guidage constitués de deux rails 88 ménagés sur la platine 44. Ces rails sont destinés à guider deux pions (non représentés) ménagés sur la partie inférieure du bloc optique 14. Lors du montage du bloc optique, ces deux pions sont insérés dans les deux rails de guidage 88, grâce aux extrémités évasées 90 de ces deux rails, et à un passage ménagé entre les languettes 78 et 80 du presseur 62 pour laisser passer chaque pion.

Ces moyens de guidage permettent de démonter le bloc optique du véhicule. En effet, comme on peut le constater, le logement en U, le montant 42 permettant la fixation du bloc optique, et les différents presseurs 60, 62, 64 sont agencés pour autoriser le déplacement du bloc optique 14 entre une position sortie, illustrée sur la figure 4, dans laquelle il se trouve hors du logement, et une position rentrée, dans laquelle il est reçu dans le logement, coopère avec presseurs et peut être fixé à nouveau sur le montant 42.

Le support d'optique 18 comporte enfin un moyen 83 de fixation à la structure du véhicule. Ce moyen 83 est fixé sur la caisse du véhicule, plus précisément sur le support d'aile 32, lequel impose le positionnement latéral (Y) du support 18 sur le véhicule. C'est notamment ce positionnement latéral, imposé de chaque côté du véhicule, qui requiert la souplesse du support central 16. Le support 18 comporte également un moyen 85 de positionnement sur la structure du véhicule. Ce moyen 85 est constitué d'une fourche destinée à être insérée dans une partie horizontale de la face avant technique, de façon à positionner le support 18 dans la direction verticale Z.

Bien que cela ne soit pas représenté, on peut prévoir d'intégrer dans le support d'optique 18 un dispositif de lavage du vitrage d'optique, un capteur-émetteur de rayons infrarouges, ou encore tout autre radar.

On peut constater que, grâce à l'invention, on dispose d'un support permettant de démonter le bloc optique sans nécessiter le démontage de la peau de pare-chocs, d'une ail ou d'une grille de calandre et sans modifier le positionnement de ces pièces entourant le bloc optique.

On notera enfin que l'invention n'est pas limitée aux modes de réalisation précédemment décrits.

## Revendications

1. Support (18) pour bloc optique, comportant un logement adapté pour recevoir un bloc optique (14) comprenant un vitrage d'optique et un boîtier d'optique, des moyens démontables (50) de fixation du bloc optique dans le logement, et des moyens (82) de mise en référence du bloc optique avec au moins une aile environnante 34), les moyens de mise en référence étant configurés pour agir directement sur les deux bords en regard des pièces à mettre en reférence pour positionner ces deux bords l'un par rapport a l'autre, le logement, les moyens de fixation et les moyens de mise en référence étant agencés pour autoriser le déplacement du bloc optique entre une position sortie, dans laquelle ledit bloc optique se trouve hors du logement sans nécessiter le démontage de l'aile et sans modifier son positionnement, et une position rentrée, dans laquelle ledit bloc optique (14) est reçu dans le logement, coopère avec les moyens de mise en référence (82) et peut être fixé en position par les moyens de fixation (50), le support comprenant en outre des moyens de guidage (88) qui guident la bloc optique (14) entre les positions sortie et rentrée.

2. Support selon la revendication 1, dans lequel les moyens de guidage du bloc optique comportent un pion, une nervure, und glissière ou un rall (88), conformés de façon à coopérer avec un moyen de guidage complémentaire ménagé sur le bloc optique (14).

3. Support selon rune quelconque des revendications 1 à 2, dans lequel les moyens de guidage autorisent le déplacement du bloc optique depuis le compartiment moteur du véhicule vers la position rentrée.

4. Support selon l'une quelconque des revendications 1 à 3, comportant des moyens démontables (84) de fixation de l'aile.

5. Support selon l'une quelconque des revendications 1 à 4, dans lequel les moyens démontables (84) de fixation du bloc optique ou de l'aile sont confondus.

6. Support selon la revandication 5, dans lequel les moyens de fixation sont configurés de façon à préndre trois positions distinctes de fixation, à savoir une position de fixation du bloc optique et de l'aile, une position de fixation du bloc optique uniquement, et une position de non fixation, dans laquelle ni le bloc optique ni l'aile ne sont fixés au support.

7. Support selon l'une quelconque des revendications 1 à 6, dans lequel les moyens démontables (84) de fixation du bloc optique ou de l'aile ne sont accessibles que lorsque le capot du véhicule est ouvert.

8. Support selon l'une quelconque des revendications 1 à 7, délimitant le logement en comprenant trois montants (40, 42, 46) disposés en U, à l'intérieur duquel se trouve le logement.

9. Support selon l'une quelconque des revendications 1 à 8, comprenant une platine horizontale (44) s'étendant sous le bloc optique.

10. Support selon l'une quelconque des revendications 1 à 9, dans lequel les moyens (82) de mise eh référence du bloc optique avec l'aile sont des presseurs.

11. Support selon l'une quelconque des revendications 1 à 10, comportant des moyens (83, 85, 36) de fixation ou de positionnement sur une pièce de structure (32) du véhicule.

12. Support selon l'une quelconque des revendications 1 à 12, comportant en outre des moyens de mise en référence (60,62,64) du bloc optique avec une peau de pare-chocs (12).

13. Support selon l'une quelconque des revendications 1 à 12, dans lequel l'aile est une aile avant.

14. Support selon l'une quelconque des revendications 1 à 13, comportant en outre des moyens de mise en reférence du bloc optique avec une grille d'entrée d'air.

15. Support selon l'une quelconque des revendications 1 à 14, comportant des moyens de fixation dun dispositif de lavage d'un vitrage d'optique, d'un capteur-émetteur de rayons infrarouges, d'un autre radar.

## Claims

1. Support (18) for headlight unit including a housing adapted to receive a headlight unit (14) comprising a headlight glass and a headlight casing, removable means (84) for fastening the headlight unit in the housing and positioning means (82) to put the headlight unit into position near at least one neighbouring wing (34), the positioning means being configured to act directly on the two opposite edges of the parts to be positioned to position these two edges with respect to each other, the housing, the fastening means and the referencing means being designed to allow the headlight unit to move between a removed position, in which said headlight unit is outside the housing, without any need to dismantle the wing and without modifying its positioning, and an inserted position, in which said headlight unit (14) is positioned inside the housing, cooperates with the positioning means (82) and can be fastened in position by the fastening means (50), the support also comprising guide means (88) which guide the headlight unit (14) between the removed and inserted positions.

2. Support according to claim 1, wherein the means for guiding the headlight unit comprise a pin, a rib, a slide or a rail (88), shaped so as to cooperate with an additional guide means formed on the headlight unit (14).

3. Support according to claim 1 or 2, wherein the guide means allow the headlight unit to move from the vehicle engine compartment to the inserted position.

4. Support according to any of claims 1 to 3, comprising removable means (84) for fastening the wing.

5. Support according to any of claims 1 to 4, wherein the same removable means are used to fasten the headlight unit or the wing.

6. Support according to claim 5, wherein the fastening means are configured so as to take up three separate fastening positions, i.e. a position for fastening the headlight unit and the wing, a position for fastening the headlight unit only and a non-fastening position, wherein neither the headlight unit nor the wing are fastened to the support.

7. Support according to any of claims 1 to 6, wherein the removable means for fastening the headlight unit or the wing are only accessible when the vehicle bonnet is open.

8. Support according to any of claims 1 to 7, delimiting the housing with three uprights (40, 42, 46) arranged in a U-shape containing the housing,

9. Support according to any of claims 1 to 8, comprising a horizontal plate (44) extending under the headlight unit.

10. Support according to any of claims 1 to 9, wherein the positioning means (82) to put the headlight unit into position near the wing are pressers.

11. Support according to any of claims 1 to 10, comprising means (83, 85, 36) for fastening or positioning on a structural part (32) of the vehicle.

12. Support according to any of claims 1 to 12, also comprising means for referencing (60, 62, 64) the headlight unit with a bumper skin (12).

13. Support according to any of claims 1 to 12, wherein the wing is a front wing.

14. Support according to any of claims 1 to 13, also comprising means for referencing the headlight unit with an air intake grille.

15. Support according to any of claims 1 to 16, comprising means for fastening a device for washing a headlight glass, an infrared sensor-emitter, an other radar.

## Patentansprüche

1. Träger (18) für optische Einheit, der eine Aufnahme aufweist, die eine optische Einheit (14) aufnehmen kann, die eine Optikverglasung und ein Optikgehäuse, abnehmbare Mittel (84) zum Befestigen der optischen Einheit in der Aufnahme und Mittel (82) zum Abstimmen der optischen Einheit mit mindestens einem umgebenden Kotflügel (34) aufweist, wobei die Mittel zum Abstimmen konfiguriert sind, um direkt auf die zwei einander gegenüber liegenden Ränder der Teile einzuwirken, die abzustimmen sind, um diese zwei Ränder relativ zueinander zu positionieren, wobei die Aufnahme, die Befestigungsmittel und die Abstimmmittel eingerichtet sind, um das Verstellen der optischen Einheit zwischen einer ausgefahrenen Position, in der sich die optische Einheit außerhalb der Aufnahme befindet, ohne dass die Demontage des Kotflügels notwendig ist und ohne seine Positionierung zu ändern, und einer eingefahrenen Position, in der die optische Einheit (14) in der Aufnahme aufgenommen ist, mit den Abstimmmitteln (82) zusammenwirkt und in Position durch die Befestigungsmittel (50) befestigt werden kann, zu erlauben, wobei der Träger ferner Führungsmittel (88) aufweist, die die optische Einheit (14) zwischen der ausgefahrenen und der eingefahrenen Position führen.

2. Träger nach Anspruch 1, bei dem die Führungsmittel der optischen Einheit einen Stift, eine Rippe, eine Gleitführung oder eine Schiene (88) aufweisen, die derart ausgebildet sind, dass sie mit einem komplementären Führungsmittel, das an der optischen Einheit (14) eingerichtet ist, zusammenwirken.

3. Träger nach einem der Ansprüche 1 bis 2, bei dem die Führungsmittel das Verstellen der optischen Einheit zur eingefahrenen Position ausgehend von dem Motorraum des Fahrzeugs erlauben.

4. Träger nach einem der Ansprüche 1 bis 3, der demontierbare Mittel (84) zum Befestigen des Kotflügels aufweist.

5. Träger nach einem der Ansprüche 1 bis 4, bei dem die demontierbaren Mittel zum Befestigen der optischen Einheit oder des Kotflügels zusammengenommen sind.

6. Träger nach Anspruch 5, bei dem die Befestigungsmittel derart konfiguriert sind, dass sie drei verschiedene Befestigungspositionen einnehmen können, nämlich eine Befestigungsposition der optischen Einheit und des Kotflügels, eine Befestigungsposition der optischen Einheit allein, und eine Nichtbefestigungsposition, bei der weder die optische Einheit noch der Flügel an dem Träger befestigt sind.

7. Träger nach einem der Ansprüche 1 bis 6, bei dem die demontierbaren Mittel zum Befestigen der optischen Einheit oder des Kotflügels nur zugänglich sind, wenn die Motorhaube des Fahrzeugs offen ist.

8. Träger nach einem der Ansprüche 1 bis 7, der die Aufnahme abgrenzt und drei Streben (40, 42, 46) aufweist, die in einem U, in dessen Innerem sich die Aufnahme befindet, angeordnet sind.

9. Träger nach einem der Ansprüche 1 bis 8, der eine horizontale Platte (44) aufweist, die sich unter der optischen Einheit erstreckt.

10. Träger nach einem der Ansprüche 1 bis 9, bei dem die Mittel (82) zum Abstimmen der optischen Einheit mit dem Kotflügel Druckmittel sind.

11. Träger nach einem der Ansprüche 1 bis 10, der Mittel (83, 85, 36) zum Befestigen oder zum Positionieren auf einem Strukturteil (32) des Fahrzeugs aufweist.

12. Träger nach einem der Ansprüche 1 bis 11, der ferner Mittel zum Abstimmen (60, 62, 64) der optischen Einheit mit einer Stoßfängerverkleidung (12) aufweist.

13. Träger nach einem der Ansprüche 1 bis 12, bei dem der Kotflügel ein vorderer ist.

14. Träger nach einem der Ansprüche 1 bis 13, der ferner Mittel zum Abstimmen der optischen Einheit mit einem Lufteinlassgitter aufweist.

15. Träger nach einem der Ansprüche 1 bis 14, der Mittel zum Befestigen einer Waschvorrichtung einer Optikverglasung, eines Sensors-Senders von Infrarotstrahlen oder eines anderen Radars aufweist.
